Europäisches Patentamt

European Patent Office

Office européen des brevets

(11) Publication number: **0 320 567**
**A1**

## (12) EUROPEAN PATENT APPLICATION

(21) Application number: **88112005.9**

(22) Date of filing: **26.07.88**

(51) Int. Cl.⁴: **H04N 1/10 , A41H 3/00**

(30) Priority: **11.12.87 IT 8351487**

(43) Date of publication of application:
**21.06.89 Bulletin 89/25**

(84) Designated Contracting States:
**AT BE CH DE ES FR GB GR IT LI LU NL SE**

(71) Applicant: **Buderus Sell GmbH**
**Hüttenweg**
**D-6348 Herborn Hess. 1(DE)**

(72) Inventor: **Pozzi, Ugo**
**Frauenalberstrasse 8**
**D-7500 Karlsruhe 51(DE)**

(74) Representative: **Petraz, Gilberto Luigi**
**G.L.P. S.a.s. di Gilberto Petraz P.le Cavedalis**
**6/2**
**I-33100 Udine(IT)**

(54) Method to scan textile models and device which employs the method.

(57) Method to scan textile models which is suitable to read images and convert them into electrical signals of a numerical type, the textile models (11) being positioned on a stationary reading table (10), the electrical signals being sent to a data processing unit (14), in which method the textile models (11) have large dimensions and are positioned in a stationary manner on the reading table (10) and the reading possesses high resolution and is carried out with a stationary lens (19) by a photosensitive virtual matrix system (20) during a short travel of a light-scanning element (21).

Device to scan textile models which employs the above method and in which a scanning assembly (13) anchored by means of a support structure (12) to the reading table (10) consists of:
a lodgement box (31),
a lens (19),
a CCD sensor (21),
a slide block (23) to support the CCD sensor (21),
a threaded shaft (32) which cooperates with the slide block (23),
- guide shafts (38) to guide the slide block (23), and
- a motor (35) with an encoder and means (36-37) to transmit motion to the threaded shaft (32).

fig. 2

## METHOD TO SCAN TEXTILE MODELS AND DEVICE WHICH EMPLOYS THE METHOD

This invention concerns a method to scan textile models. To be more exact, the invention concerns a method suitable to read models of great dimenions with a high resolution system, the models being positioned in a stationary manner on suitable reading tables.

The method provides for the transmission of signals arising from such reading to a processing unit connected to a system able to shear textile surfaces.

The invention concerns also a scanning device which employs such method.

In the state of the art many methods and devices are known which are suitable to read an image and to convert it into electrical signals of a numerical type. Such signals, when suitably processed, are employed to operate units which fulfil various functions, depending on the application for which the overall system is intended.

The scanning systems, whether employing "x-y" scanning or a telecamera, have obtained manifold applications in very different fields.

The text FR-A-2565003, for instance, discloses a method of scanning textile models in which the scanning is performed by displacing the optical assembly according to an axis in the direction of the greater length of the model, which is positioned in a stationary manner on a reading table.

EP-A-0124098 discloses a reading device consisting of a CCD sensor and an analogue-digital convertor, the device being suitable for facsimile or office information systems.

Applications of telecamera scanning systems to the textile field which are able to scan models of great dimenions with a very high resolution are not known.

The present applicant has designed, tested and embodied a method and a device able to read textile models of great dimensions positioned in a stationary manner on a suitable reading table.

Such textile models consist of drawings on paper or on another support or else of models and/or samples of fabrics or other like surfaces such as leather, hide, synthetic materials, etc.

The biggest dimensions of the models to be scanned are of the order of a width of about 1800 mm. and of a length of about 3000 mm.

The method according to the invention provides for the image of the model to be scanned and converted thereafter into electrical signals of a numerical type.

The scanning of the image takes place by dividing it into square units called "pixels" arranged side by side in rows (according to the width of the drawing) and in columns (according to the length of the drawing). The dimensions of each pixel correspond to 0.125 mm. x 0.125 mm.

The method provides for the image to be obtained by means of a telecamera which employs a linear CCD sensor that performs mechanical scanning of the image.

The scanning is carried out on dimensions reduced to values such as to contain the whole width of the image in the row read by the CCD sensor.

The CCD sensor which is employed advantageously according to the invention possesses 4096 pixels to which there corresponds, on a minimum width of 1800 mm. of the image, a resolution of a high value of 0.439 mm.

So that the scanning can be carried out with a CCD sensor, the image is reduced by means of a suitable lens until it has a length which the present applicant has found to be advantageous, namely 42.9 mm.

The reading of the image is obtained by moving the CCD sensor in the direction of the length of the reduced image.

The movement of the CCD sensor is micrometric and consists of displacements in steps of 7 μm, namely having the same resolution as the pixels of the CCD sensor so that the dimensions of the pixel are the same as regards its width and its length.

The motion of the CCD sensor is obtained with a motor equipped with an encoder and operated by a computer, which receives the signals of the encoder and provides for the operation of the motor itself.

The CCD sensor is operated by means of signals coming from a circuit called "a timings generator" and provides as its output a video signal which, after suitable amplification, is sent to an analogue-digital converter of a flash type.

The numerical data provided by the converter are sent to an interface circuit which communicates with a data processing unit.

The part concerning the generation of the timings and the video amplifier is positioned advantageously in the telecamera.

The other circuits can be obtained on a card positioned in the data processing unit.

The data processing unit is connected to a shearing device which shears textile surfaces substantially at the same time as, or at a time deferred in relation to, the reading of the corresponding models.

The method of the invention enables a device to be obtained with reduced dimensions and with limited moving mechanical parts; moreover, the device can be easily applied to existing reading tables.

The invention is therefore obtained with a method to scan textile models according to the features of Claim 1 and the claims dependent thereon.

The invention is also embodied with a device which employs the above method according to the features of Claim 7 and the claims dependent thereon.

The attached figures, which are given as a non-restrictive example, show the following:-

Fig.1 shows a diagram of a plant to scan models according to the invention with a connected shearing of textile surfaces;

Fig.2 shows diagrammatically the method to scan models according to the invention;

Fig.3 gives a block diagram of the electronic part of the scanning system with a telecamera;

Fig.4 gives a front view of an embodiment of the slide block of the telecamera assembly;

Fig.5 is a plan view of the embodiment of Fig.4;

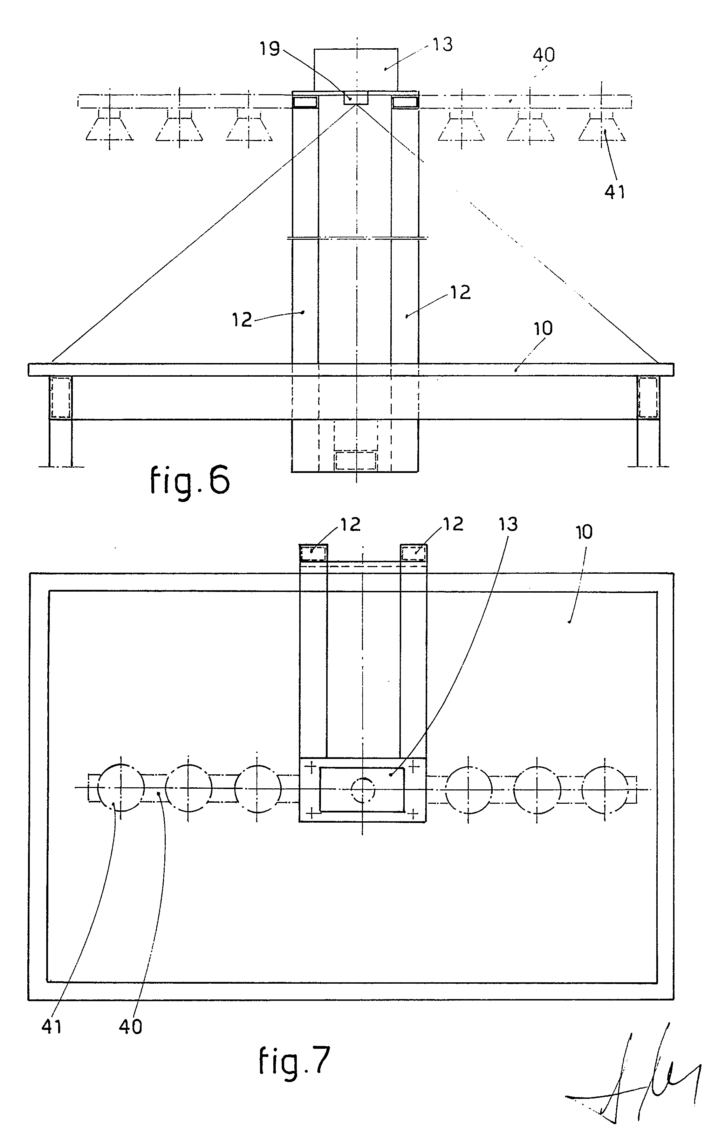

Fig.6 shows diagrammatically a front view of an embodiment of the reading table with the telecamera assembly;

Fig.7 is a plan view of the embodiment of Fig. 6.

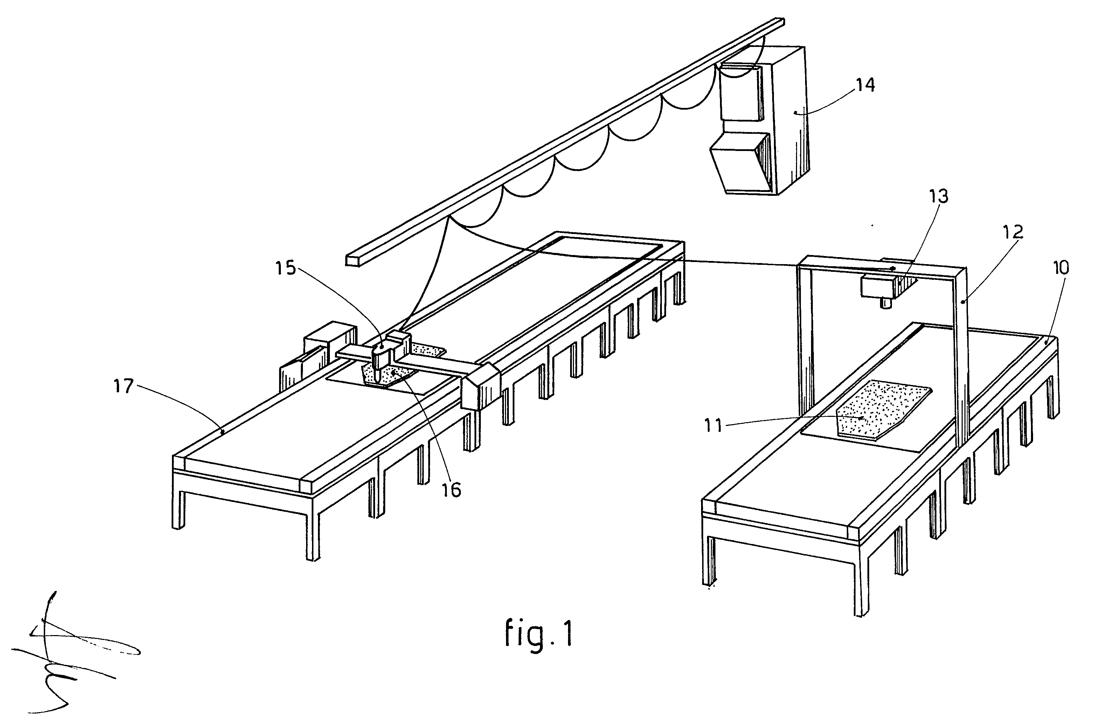

The diagram of Fig.1 shows a table 10 to read textile models 11 which cooperates with a structure 12 that supports a telecamera 13.

The textile model 11 is in a stationary position on the table 10 during the scanning of the image with the telecamera 13.

The telecamera 13 is connected to a data processing unit 14 which actuates a device 15 to shear textile surfaces 16 positioned on a shearing table 17.

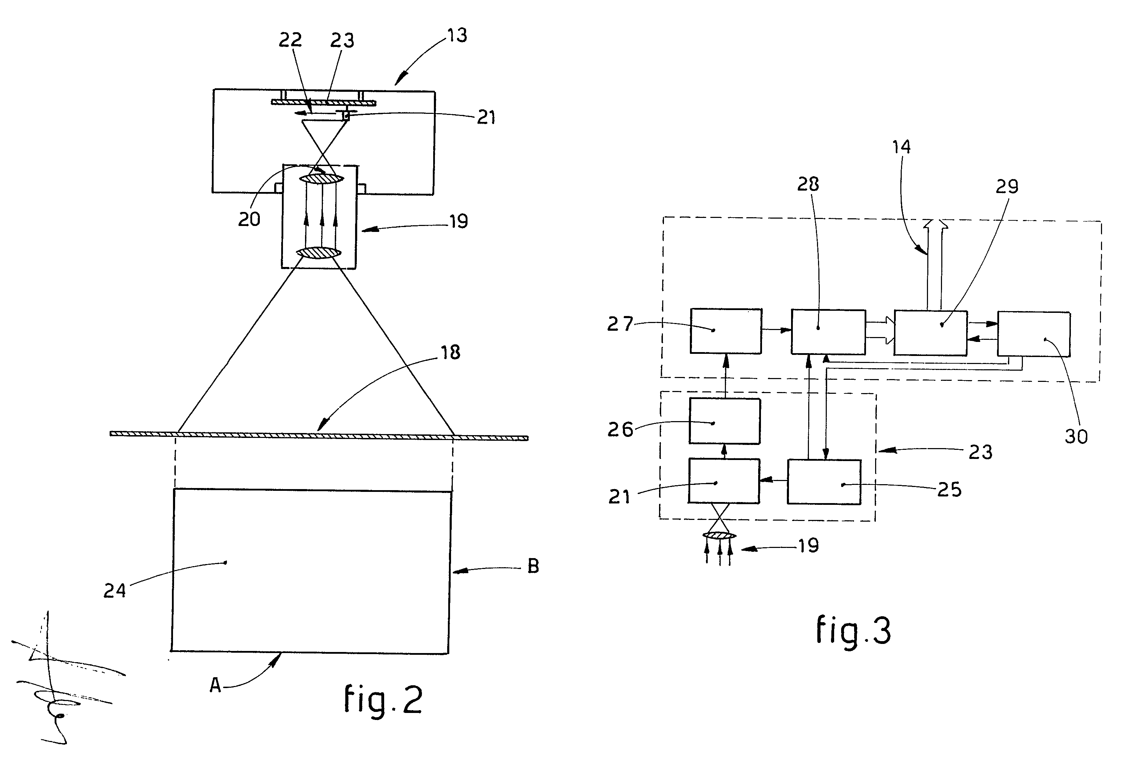

In Fig.2 an image 18 is scanned by the telecamera 13 by means of a lens 19, which reduces the image at 20.

A CCD sensor 21 scans the reduced image 20 while being displaced in the direction of the arrow 22 owing to the action of a slide block referenced with 23, which advances with a micrometric movement.

The lower part of Fig.2 shows a plan view 24 of the image 18 with sides A and the lengthwise side A can have a length of 3000 mm., whereas the width B can be 1800 mm., as we said earlier.

The lengthwise side A corresponds to the side scanned by the CCD sensor 21 moving on the slide block 23, whereas the width B is the side which is divided into 4096 pixels by the CCD sensor 21.

The block diagram of Fig.3 shows the electronic portion which supervises the dialogue between the telecamera 13 and the data processing unit 14.

The CCD sensor 21 is operated with signals coming from a timings generator 25 and provides as output a video signal which, after suitable amplification at 26, passes to a buffer 27.

The signal is sent next to an analogue-digital flash-type converter 28, the numerical data supplied by which are passed on to an interface circuit 29, which communicates with the data processing unit 14.

A control logic 30 supervises the functions of the above assemblies.

The timings generator 25 and the video amplifier 26 together with the CCD sensor 21 are located on the slide block 23. The other circuits detailed above are obtained advantage ously on a card positioned in the data processing unit 14.

The scanning of the image in colours also forms part of the purposes of the invention; a person skilled in this field can easily infer the extension of the above description to cover scanning in black and white.

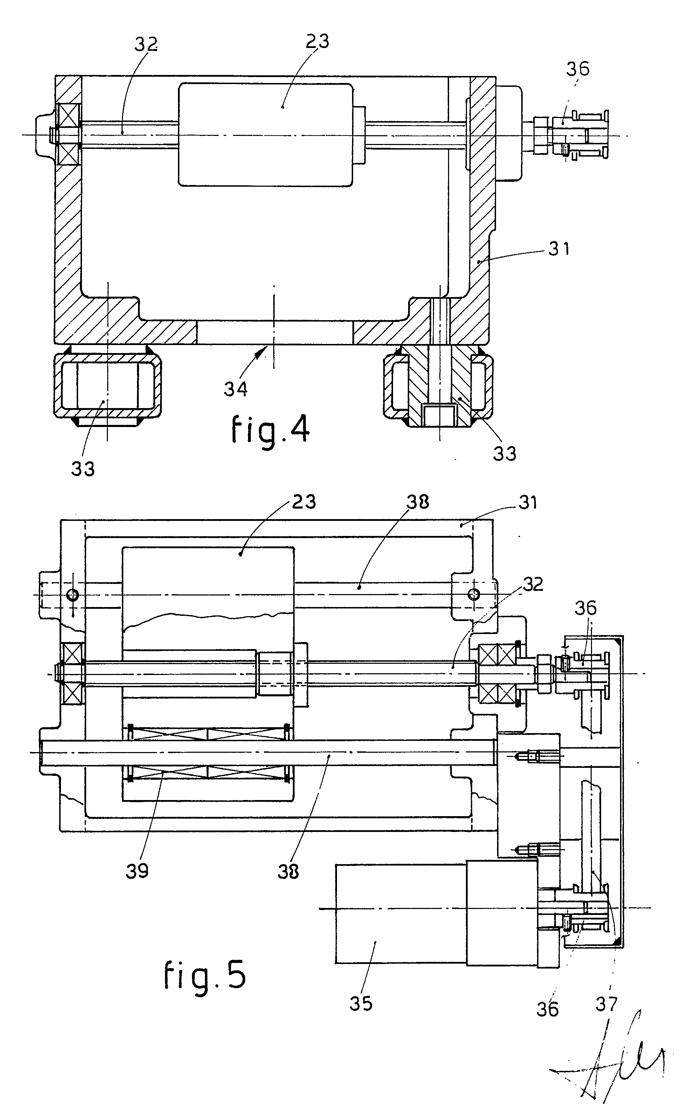

Fig.4 shows an embodiment of the slide block 23 which displaces the CCD sensor 21. A threaded shaft 32 which cooperates with the slide block 23 is supported suitably in a box 31 of the telecamera 13; this box 31 is connected at 33 to the support structure 12 fitted to the reading table 10 and has in its base an opening 34 for the installation of the lens 19.

The micrometric movement of the slide block 23 is obtained by rotation of the threaded shaft 32 by a motor 35, which is advantageously a D.C. motor and is equipped with an encoder.

Transmission of motion from the motor 35 to the threaded shaft 32 is obtained suitably with a positive system of pulleys 36 and a toothed belt 37.

During its movement the slide block 23 is guided laterally on two guide shafts 38, the couplings of the slide block 23 to the guide shafts 38 being obtained advantageously with a system of ball bearings 39.

Figs .6 and 7 show diagrammatically a system for the fitting of the telecamera assembly 13 to the reading table 10. The support structure 12 comprises cross members 40 which hold lamps 41 suitable to light up the surface of the reading table 10 on which the textile model 11 is positioned.

## Claims

1 - Method to scan textile models which is suitable to read images and convert them into electrical signals of a numerical type, the textile models (11) being positioned on a stationary reading table (10), the electrical signals being sent to a data processing unit (14), in which method the textile models (11) have large dimensions and are positioned in a stationary manner on the reading table (10) and the reading possesses high resolutions and is carried out with a stationary lens (19) by a photosensitive virtual matrix system (20) during a short travel of a light-scanning element (21).

2 - Method as claimed in Claim 1, in which the light-scanning element (21) is a linear CCD sensor of 4096 x 4096 pixels.

3 - Method as claimed in Claim 1 or 2, in which the CCD sensor (21) is provided with straight micrometric movement.

4 - Method as claimed in any claim hereinbefore, in which the straight movement of the CCD sensor (21) is obtained with a motor (25) equipped with an encoder.

5 - Method as claimed in any claim hereinbefore, in which the motor (35) is actuated by the data processing unit (14).

6 - Method as claimed in any claim hereinbefore, in which the electrical signals corresponding to the images scanned are suitable, after being processed (14), to actuate a device (15) which shears textile surfaces (16).

7 - Device to scan textile models which employs the method of the claims hereinbefore and in which a scanning assembly (13) anchored by means of a support structure (12) to the reading table (10) consists of:
a lodgement box (31),
a lens (19),
a CCD sensor (21),
a slide block (23) to support the CCD sensor (21),
a threaded shaft (32) which cooperates with the slide block (23),
- guide shafts (38) to guide the slide block (23), and
- a motor (35) with an encoder and means (36-37) to transmit motion to the threaded shaft (32).

8 - Device as claimed in Claim 7, which comprises in the scanning assembly (13) a timings generator (25) and a video amplifier (26).

9 - Device as claimed in Claims 7 and 8, in which the timings generator (25) and the video amplifier (26) are connected respectively to a buffer (27) and to an analogue-digital flash-type converter (28).

10 - Device as claimed in any of Claims 7, 8 and 9, in which the timings generator (25) is connected to a control logic (30).

fig.1

fig.2

fig.3

EP 0 320 567 A1

fig.4

fig.5

fig.6

fig.7

European Patent Office

EUROPEAN SEARCH REPORT

Application Number

EP 88 11 2005

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | FR-A-2 565 003 (VALOIS)<br>* Page 1, lines 1-19; page 4, line 18 - page 8, line 25 * | 1-10 | H 04 N 1/10<br>A 41 H 3/00 |
| D,Y | EP-A-0 124 098 (WANG LABORATORIES)<br>* Page 5, line 29 - page 7, line 9 * | 1-10 | |
| A | PROCEEDINGS OF THE IEEE, vol. 72, no. 3, March 1984, pages 300-311, IEEE, New York, US; F.A. WANG et al.: "The Wang Professional Image Computer: a new dimension to personal and office computing"<br>* Page 303, left-hand column, line 1 - page 304, right-hand column, line 26 * | 2,5,8, 10 | |
| A | EP-A-0 131 814 (DATACOPY)<br>* Page 3, lines 6-26 * | 4,7 | |
| A | PATENT ABSTRACTS OF JAPAN, vol. 6, no. 205 (E-136)[1083], 16th October 1982; & JP-A-57 112 181 (TOKYO SHIBAURA DENKI K.K.) 13-07-1982<br>* Abstract * | 7 | TECHNICAL FIELDS SEARCHED (Int. Cl.4)<br><br>H 04 N 1/00<br>A 41 H 3/00 |

The present search report has been drawn up for all claims

| Place of search | Date of completion of the search | Examiner |
|---|---|---|
| THE HAGUE | 16-03-1989 | DE ROECK A.F.A. |